Europäisches Patentamt

European Patent Office

Office européen des brevets

(11) Veröffentlichungsnummer: **0 418 494 A1**

# (12) EUROPÄISCHE PATENTANMELDUNG

(21) Anmeldenummer: 90113883.4

(22) Anmeldetag: 19.07.90

(51) Int. Cl.5: **B23B 29/32, B23Q 3/155**

(30) Priorität: 11.09.89 DE 3930305

(43) Veröffentlichungstag der Anmeldung:
27.03.91 Patentblatt 91/13

(84) Benannte Vertragsstaaten:
CH DE FR GB LI SE

(71) Anmelder: Boehringer Werkzeugmaschinen GmbH
Stuttgarter Strasse 50 Postfach 220
W-7320 Göppingen(DE)

(72) Erfinder: Hafner, Wolfgang, Dipl.-Ing.
Zeitblomweg 9
W-7334 Süssen(DE)
Erfinder: Kuhn, Siegfried, Ing.-grad.
Gammelshauserstrasse 8
W-7321 Dürnau(DE)
Erfinder: Mühlich, Werner
Gneisenaustrasse
W-7334 Süssen(DE)
Erfinder: Räder, Robert
St.-Galler-Strasse 17
W-7320 Göppingen(DE)
Erfinder: Ritz, Omar, Dipl.-Ing.
Hauptstrasse 121
W-7321 Wangen(DE)
Erfinder: Schulten, Herman
Brückenstrasse 46
W-7321 Birenbach(DE)
Erfinder: Unruh, Manfred, Dipl.-Ing.
Hohenstaufenstrasse 52
W-7320 Göppingen(DE)

(74) Vertreter: Hansmann, Axel et al
Albert-Rosshaupter-Strasse 65
W-8000 München 70(DE)

(54) Positioniervorrichtung.

(57) Die Erfindung befaßt sich mit einem Verfahren zum Wechseln von Werkzeugen (12) in einem Werkzeugkopf (11) für angetriebene Werkzeuge, welcher in der Revolverscheibe (10) eines Werkzeugrevolvers einer Werkzeugmaschine aufgenommen ist, und auch mit einem Werkzeugwechsler. Es ist vorgesehen, daß der Werkzeugkopf (11) durch Verschwenken der Revolverscheibe (10) gegenüber dem Revolvergehäuse (9) um die Revolverachse (R) in eine von der Bearbeitungsposition verschiedene Wechselposition gebracht wird, sowie das zu wechselnde Werkzeug (12) bzw. die zugeordnete Werkzeugaufnahme (26) des Werkzeugkopfes (11) durch Drehen des Drehantriebes des Werkzeugkopfes (11) über die Antriebsvermittlung (14) in der Revolverscheibe (10) von dem Revolvergehäuse (9) aus in eine für den Werkzeugwechsel geeignete Drehlage bezüglich des Werkzeugkopfes (11) gebracht wird, das Lösen bzw. Spannen des Werkzeuges in der Werkzeugaufnahme des -Werkzeugkopfes (11) über die von der Antriebsachse (20) des Werkzeugkopfes (11) räumlich getrennte Spannachse (5) von der Rückseite der Revolverscheibe (10) her erfolgt.

Fig. 2.

Fig. 1

Die Erfindung betrifft Werkzeugmaschinen mit einem drehbaren Werkzeugrevolver, welcher mehrere Werkzeugköpfe trägt, in die wiederum Werkzeuge eingesetzt sind. Bei diesen Werkzeugen kann es sich sowohl um feststehende als auch um drehantreibbare Werkzeuge handeln.

Der häufigste Fall derartiger Werkzeugmaschinen sind Drehmaschinen, deren Werkzeugrevolver sowohl mit feststehenden als auch mit drehantreibbaren Werkzeugen bestückt sind.

Derartige Werkzeugmaschinen weisen auf dem Werkzeugschlittensystem ein Revolvergehäuse auf, welches am entsprechenden Support befestigt ist. In diesem Revolvergehäuse ist die Revolverscheibe drehbar gelagert.

Es können sowohl die Werkzeugköpfe, die auf der Revolverscheibe sitzen, gewechselt werden, als auch nur das Werkzeug selbst, wobei der Werkzeugkopf in der Revolverscheibe verbleibt.

Je mehr derartige Werkzeugmaschinen in automatisierte Fertigungsabläufe integriert werden, um so mehr muß versucht werden, diese Arbeitsvorgänge zu automatisieren. Das automatische Wechseln der Werkzeugköpfe ist bereits bekannt. Zur Verwirklichung sind unterschiedliche konstruktive Möglichkeiten verwirklicht worden:

Einerseits gibt es Konstruktionen, bei denen der Werkzeugkopf mit einem Schaft in die Revolverscheibe eingesetzt wird, wobei über diesen Schaft sowohl das Lösen bzw. Spannen des Werkzeugkopfes in der Revolverscheibe als auch der Antrieb des Werkzeugkopfes und damit der darin aufgenommenen angetriebenen Werkzeuge verwirklicht wird.

Diese Lösung bringt erhebliche Nachteile mit sich. Zum einen müssen beim Antrieb des Werkzeugkopfes und damit des angetriebenen Werkzeuges erhebliche Drehmomente übertragen werden, wobei die Obergrenze durch Material und besonders Querschnittsgröße der das Drehmoment übertragenden Welle bestimmt werden. Wenn nun aus konstruktiven Gründen für den einzigen Schaft, über den der Werkzeugkopf mit der Revolverscheibe verbunden ist, ein bestimmter, maximaler Durchmesser vorgegeben ist, so steht dieser maximal verfügbare Durchmesser nicht allein für die Übertragung des Drehmomentes beim Antrieb des Werkzeuges zur Verfügung, da innerhalb dieses Durchmessers auch die Spannung des Werkzeugkopfes in der Revolverscheibe verwirklicht werden muß. Hierdurch geht verfügbarer Querschnitt verloren, wodurch sich das übertragbare Drehmoment reduziert.

Soll nun durch diesen einzigen Schaft zusätzlich noch das Spannen und Lösen des Werkzeuges im Werkzeugkopf realisiert werden, so geht hierdurch wiederum Querschnittsfläche für die übertragende Antriebswelle verloren, wodurch das übertragbare Drehmoment für das drehbare Werkzeug weiter reduziert wird.

Diese Lösung bringt jedoch auch räumliche Nachteile mit sich:Zwar besitzt der Werkzeugrevolver eine Reihe von Aufnahmen für angetriebene Werkzeugköpfe, jedoch muß dieser Antrieb lediglich in einer bestimmten Position eines Werkzeugkopfes gegenüber dem Revolvergehäuse und damit der Werkzeugmaschine erfolgen, der sogenannten Bearbeitungsposition, in der sich das Werkzeug in der gewünschten Position bezüglich des Werkstückes befindet. Deshalb muß ein Drehantrieb für angetriebene Werkzeuge und Werkzeugköpfe nur ein einziges Mal innerhalb des Revolvergehäuses realisiert sein, jedoch müssen in jeder Aufnahme der Revolverscheibe für angetriebene Werkzeugköpfe Einrichtungen zur Antriebsvermittlung dieses Antriebs aus dem Revolvergehäuse zum Werkzeugkopf vorhanden sein. Der Antrieb innerhalb des Revolvergehäuses befindet sich damit in der der Bearbeitungsposition entsprechenden Lage und damit in unmittelbarer Nähe des Werkstückes. Wenn nun durch den einzigen Schaft, über den Werkzeugkopf und Revolverscheibe miteinander in Verbindung stehen, zusätzlich auch die Spannung des Werkzeugkopfes und gar noch die Spannung des Werkzeuges im Werkzeugkopf realisiert werden, so müssen an dieser Stelle des Revolvergehäuses auch die hierfür notwendigen Spannmotore bzw. geeignete Übermittlungseinrichtungen wie Wellen, Getriebe etc. angeordnet werden. Dies ist jedoch - je nach Konfiguration und Dimensionierung des zu bearbeitenden Werkstückes bzw. der anderen Komponenten der Werkzeugmaschine - äußerst hinderlich, da in häufigen Fällen diese Aggregate bzw. Übermittlungseinrichtungen anderen Aggregaten der Werkzeugmaschine wie Reitstock, Lünetten etc. oder gar dem Werkstück selbst im Wege stehen werden.

Eine andere bekannte Lösung besteht darin, die Spannung des Werkzeugkopfes in der Revolverscheibe einerseits und den Antrieb des Werkzeugkopfes und damit der angetriebenen Werkzeuge andererseits nicht auf der gleichen, sondern auf räumlich verschiedenen Achsen zu realisieren.

Da, wie gesagt, die Antriebseinheit für den Antrieb des Werkzeugkopfes nur ein einziges Mal vorhanden sein muß, wird diese normalerweise innerhalb des Revolvergehäuses angeordnet, so daß es sich empfiehlt, die Antriebsvermittlungen innerhalb der Revolverscheibe auf einem Antriebsteilkreis unterzubringen, der noch innerhalb der Abmessungen des Revolvergehäuses liegt. Auch bei dieser Lösung muß die Antriebsachse innerhalb des Revolvergehäuses selbstverständlich in der der Bearbeitungsposition entsprechenden Lage angeordnet sein.

Dagegen kann die mit der Antriebsachse des Werkzeugkopfes micht übereinstimmende Spannachse bezüglich dieser parallel versetzt zum Außenumfang der Revolverscheibe sein, und ggf. auch außerhalb der Reichweite des eigentlichen Revolvergehäuses.

Der Vorteil diese Lösung liegt nun darin, daß wegen der separaten Spannachse die Vorrichtungen zum gegebenenfalls automatischen Spannen und Lösen des Werkzeugkopfes in der Revolverscheibe wie Spannmotor etc. nicht an bzw. in der Nähe der Bearbeitungsposition untergebracht werden müssen, sondern in einer von dieser verschiedenen Drehlage der Revolverscheibe, also beispielsweise um etwa 90° versetzt. Dort herrschen normalerweise weniger beengte räumliche Verhältnisse, so daß problemlos außerhalb des eigentlichen Revolvergehäuses ein Spannmotor von der Rückseite der Revolverscheibe her den Spannschaft des Werkzeugkopfes in die Revolverscheibe hereinziehen kann. Zusätzlich geht für diese Spannfunktion der Antriebseinheit bzw. den in der Revolverscheibe jeweils vorgesehenen Antriebsvermittlungen zwischen dem Antrieb des Revolvergehäuses und dem Werkzeugkopf nichts vom verfügbaren Durchmesser für das Spannen verloren, so daß der konstruktiv mögliche maximale Wellendurchmesser für diese Antriebsvermittlung voll zur Übertragung des Drehmomentes für den Antrieb des Werkzeuges ausgenutzt werden kann.

Während bisher vom Spannen und Lösen des Werkzeugkopfes in der Revolverscheibe und einer bestimmten, dafür erforderlichen Drehlage der Revolverscheibe bezüglich des Revolvergehäuses die Rede war, stellt sich nun das Problem des automatischen Wechselns von Werkzeugen im Werkzeugkopf, wobei der Werkzeugkopf in der Revolverscheibe verbleiben soll. Dazu muß gesagt werden, daß ein im Werkzeugkopf befindliches Werkzeug nicht in jeder Drehlage des Werkzeuges bezüglich des Werkzeugkopfes gewechselt werden kann, sondern meist nur in einer bestimmten Drehlage. Dies hängt damit zusammen, daß auch in angetriebene Werkzeugköpfe nicht nur angetriebene Werkzeuge, sondern auch feststehende Werkzeuge wie etwa Drehmeißel eingesetzt werden, und diese feststehenden Werkzeuge selbstverständlich in einer bestimmten Drehlage in der Werkzeugaufnahme sitzen müssen, um zur Bearbeitung eingesetzt werden zu können. Da aber zwischen angetriebenen und feststehendem Werkzeugen frei gewählt werden können soll, müssen auch angetriebene Werkzeuge, für die von der Funktion her keine bestimmte Drehlage vorgegeben ist, in einer bestimmten Drehlage in die Aufnahme des Werkzeugkopfes eingesetzt werden, da ihr Aufnahmeschaft ja dem eines feststehenden Werkzeuges entsprechen muß.

Da von einem automatischen Werkzeugwechsler die Werkzeuge selbst immer in der gleichen Positionierung herangebracht werden, bedeutet dies, daß die Werkzeugaufnahme des Werkzeugkopfes für den Wechselvorgang in eine bestimmte Drehlage gebracht werden muß. Da die Vorrichtungen zum Erreichen dieser Drehlage vorteilhafterweise nur einmal in oder an dem Revolvergehäuse vorhanden sein sollen, ist weiterhin zusätzlich eine bestimmte Drehlage des Werkzeugrevolvers bezüglich des Revolvergehäuses notwendig. Es ist also streng zu unterscheiden von der Drehlage der Werkzeugaufnahme bezüglich des Werkzeugkopfes einerseits und der Drehlage des Werkzeugrevolvers bezüglich des Revolvergehäuses andererseit

Hiervon ausgehend ist es die Aufgabe der vorliegnden Erfindung, eine Werkzeugmaschine zu schaffen, bei der die Voraussetzungen nicht nur für das automatische Wechseln von Werkzeugköpfen im Werkzeugrevolver sondern auch von Werkzeugen im Werkzeugkopf, der im Werkzeugrevolver verbleibt, auf einfache und vorteilhafte Weise zu schaffen.

Diese Aufgabe wird durch die kennzeichnenden Merkmale des Ansprüches 1 gelöst.

Das Wechseln eines ganzen Werkzeugkopfes geht dabei in bekannter Weise so vor sich, daß die Revolverscheibe gegenüber dem Revolvergehäuse so weit verdreht wird, bis sich der zu wechselnde Werkzeugkopf in der Wechselposition befindet, in welcher an bzw. im Revolvergehäuse die notwendigen Einrichtungen zum Spannen bzw. Lösen des Spannschaftes 17 des Werkzeugkopfes in der Revolverscheibe vorhanden sind. Zu diesem Zweck muß natürlich die drehfeste Verriegelung der Revolverscheibe gegenüber dem Revolvergehäuse gelöst werden. Handelt es sich um zwei stirnseitig gegenüberliegende Stirnverzahnungen von Revolvergehäuse einerseits und Revolverscheibe andererseits, so ist hierfür ein axiales Abheben der Revolverscheibe vom Revolvergehäuse in Z-Richtung notwendig.

Das Wechseln eines Werkzeuges bei in der Revolverscheibe verbleibendem Werkzeugkopf geht ebenfalls nur dann vor sich, wenn zunächst der entsprechende Werkzeugkopf durch Drehung der Revolverscheibe bezüglich des Revolvergehäuses in die Wechselposition gebracht wird. In dieser Position sind an bzw. im Revolvergehäuse jedoch zusätzlich Einrichtungen zum Einstellen der richtigen Drehlage des Werkzeuges bzw. der Werkzeugaufnahme bezüglich des Werkzeugkopfes vorhanden sowie Einrichtungen zum automatischen Spannen und Lösen des Werkzeuges in der Werkzeugaufnahme.

Vorteilhafterweise bedient man sich dabei jener Ausführungsform von Werkzeugköpfen, bei denen zum Antreiben und Spannen des Werkzeugkopfes räumlich verschiedene Achsen verwendet werden, denn dann können von den beiden vorhandenen Achsen, der Spannachse und der Antriebsachse des Werkzeugkopfes, die eine für das Einstellen und Festhalten der richtigen Drehposition der Werkzeugaufnahme bezüglich des Werkzeugkopfes benutzt werden, während die andere für das Spannen bzw. Lösen des Werkzeuges in der Werkzeugaufnahme benutzt wird. Dadurch sind keine zusätzlichen verbindenden Achsen zwischen Revolverscheibe und Werkzeugkopf notwendig, so daß der konstruktive Aufwand für die Lösung der gestellten Aufgabe im Rahmen bleibt. Weiterhin müssen die Lagejustierung und das Spannen und Lösen des Werkzeuges nicht auf einer gemeinsamen Funktionsachse ausgeführt werden, was den konstruktiven Aufwand aufgrund der beengten Platzverhältnisse deutlich erhöhen würde.

Vorteilhafterweise wird daher auf der Spannachse, die zum Spannen des Werkzeugkopfes in der Revolverscheibe dient, wegen der ähnlichen Funktion und auch ähnlichen konstruktiven Ausführung zugleich auch das Spannen des Werkzeuges in der Werkzeugaufnahme des Werkzeugkopfes verwirklicht. Damit muß die Justierung der Drehlage des Werkzeuges bzw. der Werkzeugaufnahme sowie deren Festhalten für den Wechselvorgang, für die ein vorgegebenes Haltemoment erforderlich ist, über die Antriebsachse des Werkzeugkopfes erfolgen.

Dabei kann die konstruktive Lösung des Spannens bzw. Lösens des Werkzeuges in der Werkzeugaufnahme des Werkzeugkopfes nicht im einzelnen beschrieben werden, da Form und Funktion von Werkzeugschaft bzw. Werkzeugaufnahme im Werkzeugkopf von Werkzeughersteller zu Werkzeughersteller verschieden ist und damit die Spann/Lösefunktion innerhalb des Werkzeugkopfes hieran angepaßt sein muß.

Die konstruktive Lösung der Einstellung der richtigen Drehlage des Werkzeuges bezüglich des Werkzeugkopfes für den Wechselvorgang ist dagegen weitgehend werkzeugunabhängig.

Wenn sich der Werkzeugkopf in der Bearbeitungsposition befindet, so ist in dieser Position im Werkzeuggehäuse ein Antrieb vorhanden, welcher mittels einer Kupplung an eine Antriebsvermittlung weitergegeben wird, die sich innerhalb der Revolverscheibe befindet und an jeder Aufnahmeposition der Revolverscheibe für einen Werkzeugkopf vorhanden ist. Von dieser Antriebsvermittlung wird der Drehantrieb wiederum über eine Kupplung an entsprechende Einrichtungen des Werkzeugkopfes weitergegeben. Bei der Antriebsvermittlung innerhalb der Revolverscheibe handelt es sich meist um eine drehbar gelagerte Welle, die von der Rückseite der Revolverscheibe bis zur Vorderseite durchgeht und dort beispielsweise einen Vierkant aufweist, über den die Weitergabe des Drehmoments an ein entsprechendes Gegenstück innerhalb des Werkzeugkopfes erfolgt. Auf der Rückseite der Revolverscheibe ist diese Welle ebenfalls in einer Art gestaltet, um ein Drehmoment vom Antrieb des Revolvergehäuses aus aufnehmen zu können. Auf diese Gestaltung des hinteren Endes dieser Welle muß auch diejenige Einheit abgestellt sein, welche in der Wechselposition in die den Antrieb vermittelnde Welle der Revolverscheibe eingreift, um die Werkzeugaufnahme und damit das Werkzeug in die richtige Drehlage bezüglich des Werkzeugkopfes zu bringen.

Eine übliche Art der Kupplung des Antriebs mit der Antriebsvermittlung in der Revolverscheibe ist die Hirthverzahnung. Je nachdem, ob die Revolverscheibe für ein Weiterdrehen gegenüber dem Revolvergehäuse von diesem abgehoben werden muß oder auf andere Weise entriegelt wird, muß die mit der Hirthverzahnung versehene Welle des Antriebes innerhalb des Revolvergehäuses zurückziehbar ausgebildet sein oder nicht. Analog muß auch die entsprechende Welle für den Positionierantrieb ggf. von der Revolverscheibe zurückziehbar ausgebildet sein.

Die Vorteile dieser Ausführungsform liegen auf der Hand: Bei gleichem verfügbaren Durchmesser für den Antrieb bzw. die Antriebsvermittlung können höhere Drehmomente übertragen werden, da der verfügbare Durchmesser durch den Positionierantrieb nicht gemindert wird, da sich dieser an einer anderen Stelle und nicht integral im Antrieb für das drehantreibbare Werkzeug befindet und auch der Durchmesser der Vermittlungseinrichtung innerhalb der Revolverscheibe hierdurch nicht reduziert sondern in Doppelfunktion genutzt wird.

Weiterhin entstehen durch die separate Wechselposition keine zusätzlichen Kollisionseinschränkungen durch den Reitstock oder bei bestimmten Werkstückkonfigurationen. darüberhinaus kann wegen der separaten Wechselposition auch ein Werkzeugwechsel durchgeführt werden, während in die Werkzeugmaschine ein werkstück eingespannt ist und bleibt, während dies bei Zusammenlegen von Wechselposition und Bearbeitungsposition des Werkzeugkopfes meist nicht möglich ist.

Eine Ausführungsform gemäß der Erfindung ist im folgenden anhand der Figuren beispielhaft näher beschrieben. Es zeigt:

Fig. 1 eine Prinzipdarstellung einer mit einem Werkzeugrevolver ausgestatteten Drehmaschine,

Fig. 2 eine vergrößerte Prinzipdarstellung des auf dem Revolver montierten Werkzeugkopfes,

Fig. 3 eine Prinzipdarstellung von Revolverscheibe und Revolvergehäuse von der Rückseite der Revolverscheibe her,

Fig. 4 die konstruktive Ausführung des Positionierantriebes, wie er innerhalb des Revolvergehäuses auf dem Antriebsteilkreis in der Wechselposition ausgeführt ist und

Fig. 5 eine prinzipielle Schnittdarstellung des Positionierantriebes in der Nähe der Revolverscheibe.

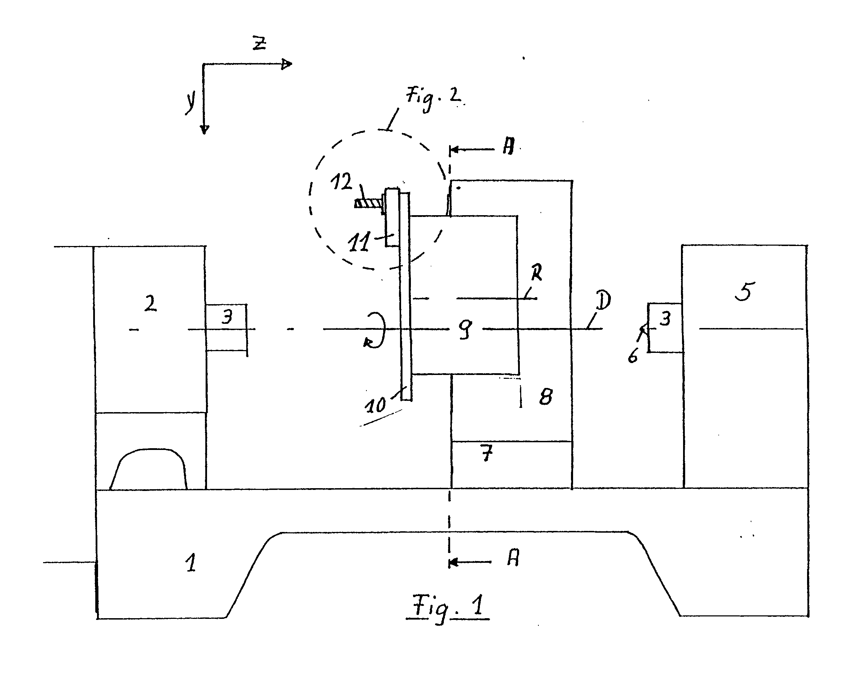

Fig. 1 zeigt eine Drehmaschine mit Werkzeugrevclver aus der Sicht des Bedieners. Auf dem Bett 1 ist auf der einen Seite der Spindelstock 2 mit dahinter angeordnetem Spindelgetriebe angeordnet. Im Spindelstock 2 ist das Spannfutter 3 gelagert, in welchem das nicht dargestellte Werkstück gelagert wird. Am anderen Ende der Maschine ist am Bett 1 der Reitstock 5 angeordnet, in dem ebenfalls ein Spannfutter 3 gelagert ist, welches im dargestellten Falkl nur eine Zentrierspitze 6 trägt.

Zwischen Reitstock und Spindelstock ist ein Längsschlitten 7 in Z-Richtung der Drehmaschine verfahrbar, auf welchem ein Planschlitten 8 quer dazu verfahren werden kann. Auf diesem Planschlitten 8 ist das Revolvergehäuse 9 befestigt, an dem die Revolverscheibe 10 drehbar gelagert ist. Je nach den Bewegungsmöglichkeiten des Werkzeugsupportes, ob also nur eine oder beide Querrichtungen der Z-Achse verwirklicht sind, befindet sich die Revolverachse R, um die sich die Revolverscheibe 10 bezüglich des Revolvergehäuses 9 drehen läßt, direkt hinter der Drehmitte D oder auch senkrecht über ihr.

An der Revolverscheibe 10 ist ein Werkzeugkopf 11 dargestellt, der mit einem antreibbaren Werkzeug 12 bestückt ist.

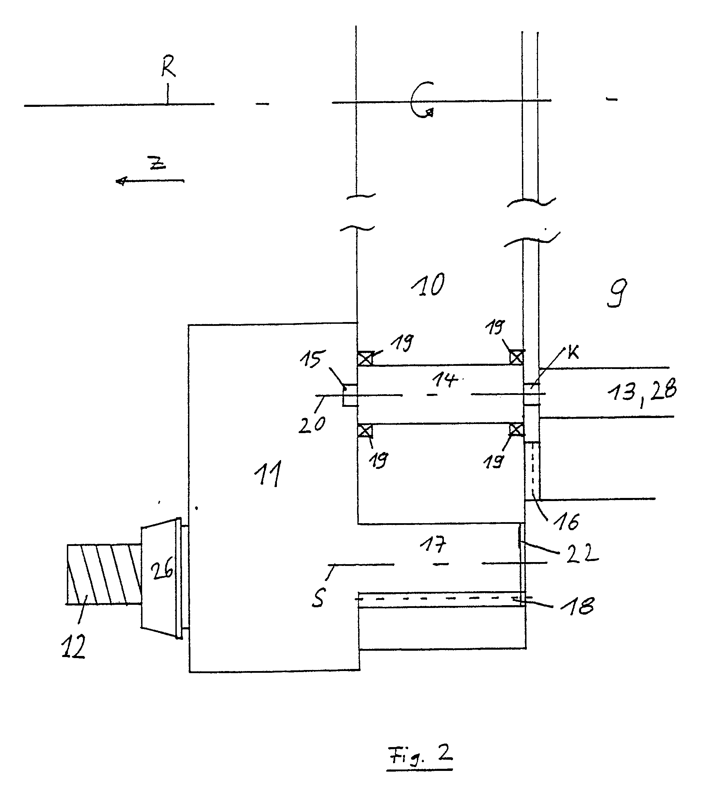

Dieser an dem Revolver befestigte Kopf ist in der Prinzipdarstellung der Fig. 2 näher dargestellt:

Sowohl die Revolverscheibe 10 als auch der Werkzeugkopf 11 sind im Querschnitt dargestellt.

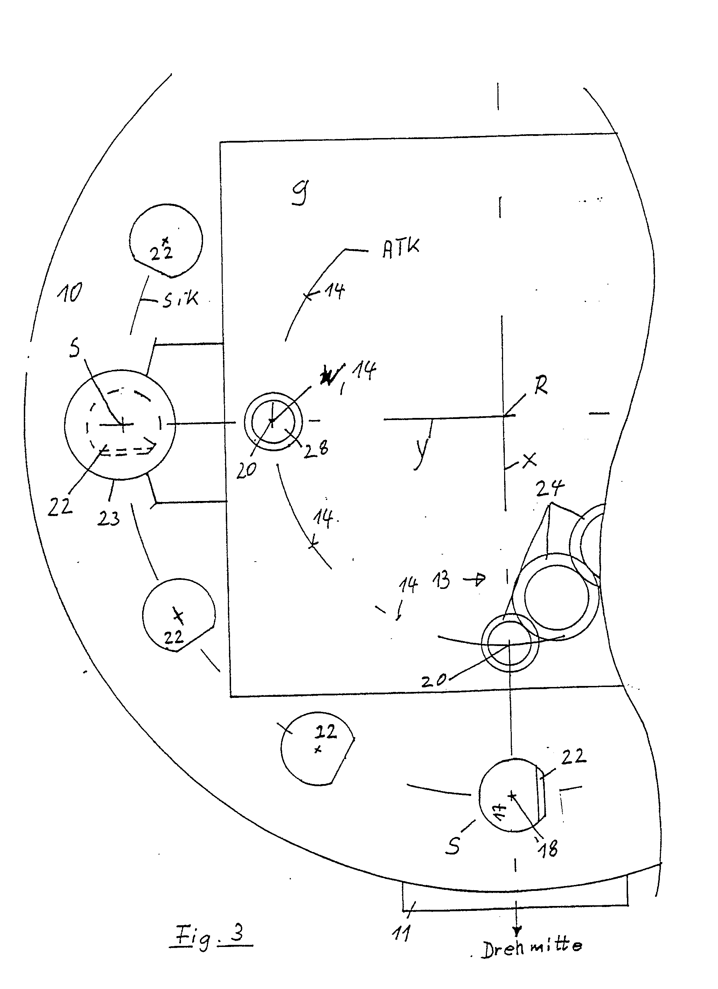

In der Werkzeugaufnahme 26 des Werkzeugkopfes 11 befindet sich ein angetriebenes Werkzeug 12, etwa ein Fingerfräser. Der Werkzeugkopf 11 ist mittels des Spannschaftes 17, dessen Mitte die Spannachse S darstellt, in einer entsprechenden Öffnung 22 für den Spannschaft aufgenommen. Das Festspannen erfolgt mittels einer Zahnstange 18 entlang des Spannschaftes 17 des Werkzeugkopfes 11, die mittels eines sogenannten Druckstückes, das z.B. eine Schnecke oder ein Ritzel enthält, in die Revolverscheibe 10 hineingezogen werden kann. Die hierfür notwendigen Vorrichtungen sind in der Fig. 2 nicht dargestellt, da diese nur im Revolvergehäuse vorhanden sind, wie in Fig. 3 dargestellt ist.

Weiterhin ist in Fig. 2 auf der Antriebsachse 20 der Werkzeugkopf 11 über beispielsweise einen Vierkant 15 mit einer Antriebsvermittlung 14 verbunden, die sich durch die gesamte axiale Länge der Revolverscheibe 10 hindurch zu deren Rückseite erstreckt. Diese Antriebsvermittlung 14, eine entsprechend gestaltete Welle, ist über Lager 19 in der Revolverscheibe 10 gelagert und besitzt an ihrem rückseitigen Ende eine Kupplung K, über die sie an den Antrieb 13 für das antreibbare Werkzeug 12 bzw. dessen Positionierantrieb 28 zum Erreichen der für das Wechseln notwenigen Drehlage ankuppelbar ist, die sich innerhalb des Revolvergehäuses befinden. Welche der beiden Antriebe in Fig.2 gemeint ist, hängt von der jeweiligen Drehlage der Revolverscheibe 10 ab, die sich um die Revolverachse R bezüglich des Revolvergehäuses 9 verdrehen läßt.

Fig. 3 zeigt die Revolverscheibe 10 und das Revolvergehäuse 9 von der Rückseite, also der der Werkzeugbestückung abgewandten Seite her. Bei dieser Prinzipdarstellung ist ein Werkzeugkopf 11 in der Bearbeitungsposition, also zur unten liegenden Drehmitte hin ausgerichtet, dargestellt. Demgegenüber befindet sich die Wechselposition um 90° bezüglich der Revolverachse R verschwenkt am linken äußeren Rand, wie an der eingezeichneten Wechselachse W auf dem Antriebsteilkkreis ATK zu erkennen, auf welcher sich innerhalb des Revolvergehäuses der Positionierantrieb 28 befindet. In der Darstellung der Fig. 3 ist somit die Wechselposition auf der Y-Achse und die Bearbeitungsposition auf der X-Achse, von der Revolverachse R aus gesehen, angeordnet.

Über den Umfang der Revolverscheibe 10 ragt lediglich der Werkzeugkopf 11 hinaus. Dieser ist mit dem Spannschaft 17, dessen Mitte als Spannachse S bezeichnet ist, in eine der Öffnungen 22 für die Spannschäfte in der Revolverscheibe 10 eingesetzt, die sich alle auf dem Spannteilkreis STK befinden. Weiter innen auf der X-Achse, zur Revolverachse R hin, ist auf dem Antriebsteilkreis ATK die Antriebsachse 20 zu sehen. Das erste von mehreren miteinander kämmenden Zannrädern, die zusammen den Antrieb 13 innerhalb des Revolvergehäuses darstellen, liegt zentrisch um die Antriebsachse 20. In dieser Drehlage der Revolverscheibe 10 und damit des Werkzeugkopfes 11 bezüglich des Revolvergehäuses 9 kann ein in den Werkzeugkopf 11 eingesetztes, antreibbares Werkzeug 12 also über den Antrieb 13 in Drehung versetzt werden, und zwar mit einem relativ großen Drehmoment, wie es für den Arbeitseinsatz eines angetriebenen Werkzeuges notwendig ist.

Befindet sich der Werkzeugkopf dagegen um 90° gedreht links außen in der Wechselposition, so liegt die Spannachse S fluchtend vor dem Spannmotor 23, der mit entsprechenden Einrichtungen zum Spannen des Werkzeuges 12 in dem Werkzeugkopf 11,, beispielsweise mittels einer nicht dargestellten Schnecke, die in die Zahnstange 18 eingreift, ausgerüstet ist. Die Antriebsachse 20 des Werkzeugkopfes fällt dann mit der Wechselachse W des Revolvergehäuses zusammem. Auf dieser Wechselachse W, die sich natürlich wiederum auf dem Antriebsteilkreis ATK befindet, ist ein Positionierantrieb angeordnet, der über die Antriebsvermittlung 14 in der Revolverscheibe 10 wiederum das Werkzeug 12 in Drehung versetzen kann. Dabei muß jedoch nur ein geringes Drehmoment aufgebracht werden, da sich das Werkzeug 12 frei dreht und sich nicht im Einsatz befindet, da ja durch diese Drehung lediglich die richtige Drehlage des Werkzeuges 12 bzw. der Werkzeugaufnahme 26 bezüglich des Werkzeugkopfes 11 für den Wechselvorgang eingestellt werden soll.

Sobald dies erreicht ist, wird durch Zusatzeinrichtungen, die am Spannmotor 23 angeordnet sind und je nach Art der verwendeten Werkzeugköpfe variieren, das Werkzeug 12 in der Werkzeugaufnahme 26 gelöst bzw. ein neues Werkzeug gespannt. Analog zu der Anzahl der Öffnungen 22 für die Spannschäfte der Werkzeugköpfe 11 auf dem Spannteilkreis STK befinden sich ebenso viele Antriebsvermittlungen 14 auf dem Antriebsteilkreis ATK innerhalb der Revolverscheibe 10, die jedoch in der Fig. 3 durch das Revolvergehäuse 9 verdeckt sind.

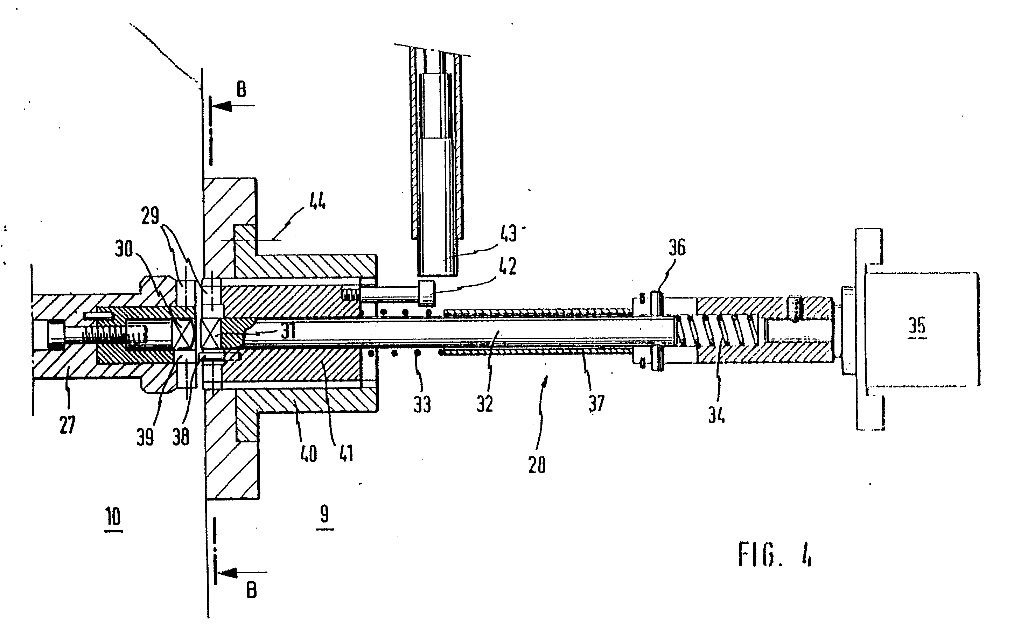

Fig. 4 zeigt nun die konstruktive Lösung des Positionierantriebs 28, wie er auf der Wechselachse W innerhalb des Revolvergehäuses 9 untergebracht ist, und dessen Zusammenwirken mit dem hinteren Ende der Welle 27, die als Antriebsvermittlung 14 von der Vorder- bis zur Rückseite in der Revolverscheibe 10 drehbar gelagert ist.

Die Stirnseite dieser Welle 27 zum Revolvergehöuse 9 hin ist mit einer konzentrisch umlaufenden Hirthverzahnung 29 ausgestattet. Im Zentrum der Stirnfläche befindet sich eine runde Vertiefung, aus der lediglich eine Klinge 30, ähnlich der Klinge eines Schraubenziehers, aufragt, jedoch nicht über die vorderste Ebene der Hirthverzahnung der Welle 27 hinaus.

Mit der Welle 27 fluchtend befindet sich in dem Revolvergehäuse 9 der Positionierantrieb 28. Dieser besteht aus einem langen, schlanken Bolzen 32 im Zentrum, der in einer Mittelbohrung einer Verschiebehülse 41 geführt ist. Der Bolzen 32 besitzt an seiner der Welle 27 zugewandten Stirnseite einen Schlitz 31, in den die Klinge 30 der Welle 27 paßt. Der Bolzen 32 wird mittels eines relativ schwachen Positioniermotors 35 in Drehung gesetzt, wobei zwischen dem Bolzen 32 und dem Positioniermotor 35 eine Zwischeneinheit mit einer Druckfeder 34 drehfest angeordnet iost, durch welche der Bolzen 32 mittels der Kraft der Feder 35 gegen die Klinge 30 gedrückt wird. Wird nun der Bolzen 32 durch den Positioniermotor 35 gedreht, so dreht sich der Bolzen 32 zunächst alleine und so lange, bis er sich auf die Welle 27 zu bewegen kann, da die mit der Welle 27 verbundene Klinge in den Schlitz 31 des Bolzens 32 einrastet. Bei Weiterdrehung dieses Bolzens 32 wird nun die Welle 27, die ja als Antriebsvermittlung 14 in der Revolverscheibe 10 dient, mitgedreht und damit auch die Werkzeugaufnahme 26 sowie das Werkzeug 12.

Der Bolzen 32 ist in einer ihn umgebenden Schiebehülse 41 verschiebbar und nicht drehfest gelagert. Diese Verschiebehülse 41 besitzt an ihrer der Revolverscheibe 10 zugewandten Stirnseite ebenfalls eine Hirthverzahnung zum Zusammenwirken mit derjenigen Hirthverzahnung der Welle 27. Die Verzahnungen befinden sich jedoch noch nicht im Eingriff, da sich zwischen der außen liegendne Hirthverzahnung und dem innenliegenden Bolzen 32 an der Stirnseite der Verschiebehülse 41 ein Stift 38 axial nach außen erstreckt, der etwas über die Hirthverzahnung hinausragt. Der entsprechende, gegenüberliegende, stirnseitige Ringbereich der Welle 27 weist nur an einer Stelle eine Ausnehmung 39 auf, in welche der Stift 38 einrasten kann.

Da die Verschiebehülse 41 von ihrer Rückseite her über eine Druckfeder 33 beaufschlagt wird, werden die beiden Hirthverzahnungen 29 der Verschiebehülse 41 und der Welle 27 ineinanderrasten, sobald die Ausnehmung 39 auf den Stift 38 trifft, was beim Weiterdrehen der Welle 27 durch den sich drehenden Bolzen 32 spätestens nach einer vollem Umdrehung der Fall ist.

Die Verschiebehülse 41 wiederum besitzt an ihrem Außenumfang ein Vielnutprofil, mit welchem sie längsverschieblich in einer mit einem entsprechenden Innenprofil versehenen Führung 40 in Form einer Buchse geführt ist, welche über eine Verschraubung 44 fest mit dem Revolvergehäuse 9 verbunden ist. Somit ändert sich die Drehlage der Verschiebehülse 41 und damit auch die Drehlage des Stiftes 38 nie, so daß sichergestellt ist, daß beim Ineinanderrasten der Welle 27 mit der Verschiebehülse 41 mittels der Hirthverzahnung 29 sich das Werkzeug 12 bzw. die Werkzeugaufnahme 26 des Werkzeugkopfes 11 immer in der gleichen Drehlage bezüglich des Werkzeugkopfes 11 befinden, nämlich in derjenigen vorbestimmten Drehlage, in der ein Wechseln des Werkzeuges möglich ist.

Ob sich die Schiebehülse 41 im eingerasteten und ausgerasteten Zustand befindet, und damit, ob sich das Werkzeug 12 bzw. die Werkzeugaufnahme 26 in einer wechselfähigen Position befindet oder nicht, wird durch einen Endschalter überprüft, dessen Tastkopf 43 eine Schraube 42 ertastet, die in die rückwärtige Stirnseite der Verschiebehülse 41 geschraubt ist. Ist die Verschiebehülse 41 mit der Welle 27 der Revolverscheibe 10 verrastet, so befindet sich die Schraube 42 außerhalb des Bereiches des Tastkopfes 43, wodurch ein entsprechendes Signal an die Werkzeugzuführeinrichtung weitergegeben wird, nunmehr das gewünschte Werkzeug 12 zu entnehmen bzw. zuzuführen.

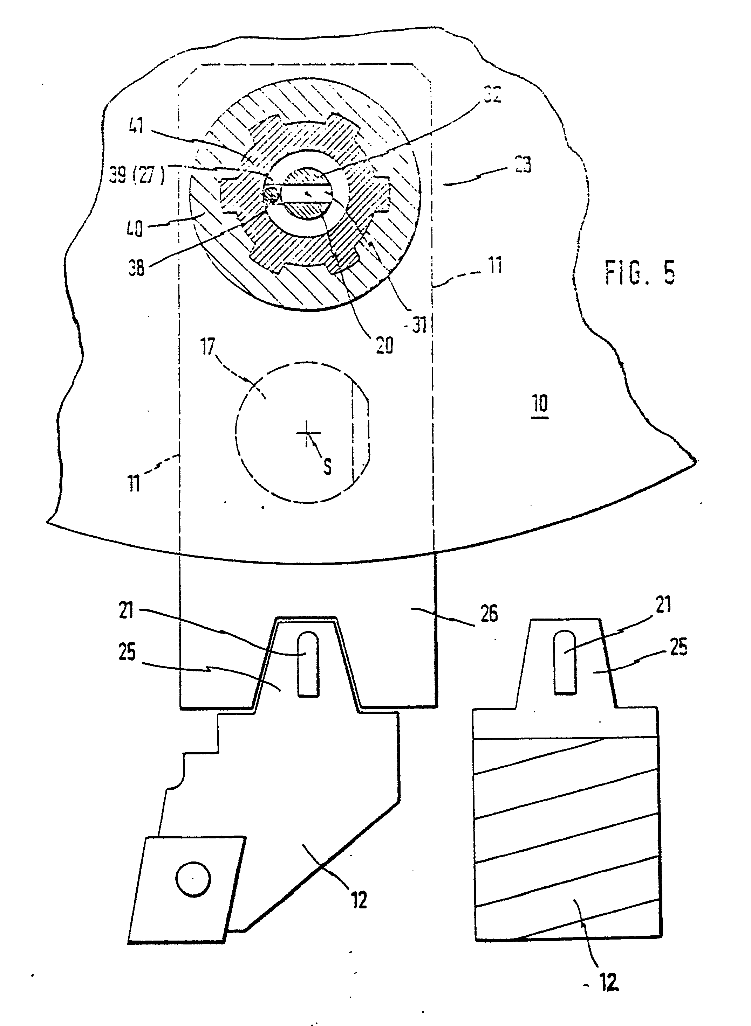

Fig. 5 zeigt eine prinzipielle Schnittdarstellung gemäß der Linie B-B, also einen Schnitt durch den Positionierantrieb 28 in der Nähe der Revolverscheibe 10 und mit Blick auf diesen.

Die obere Bildhälfte zeigt einen Teil der Revolverscheibe 10, wodurch der dabei teilweise verdeckte Werkzeugkopf 11 gestrichelt eingezeichnet ist. Um die Antriebsachse 20 herum ist die Schnittdarstellung des Positionierantriebs 28 zu erkennen: In der Mitte der Bolzen 32 mit rundem Querschnitt, wobei bei der Lage dieser Schnittdarstellung bereits der Schlitz 31 zu erkennen ist. Die Schiebehülse 41 umgibt den Bolzen 32, wobei in einem um den Bolzen 32 herum laufenden Ringbereich lediglich an einer Stelle der positionierende Stift 38 zu erkennen ist, der in der entsprechenden Ausnehmung 39 der Welle 27 sitzt. Am Außenumfang der Schiebehülse 41 ist das Vielnutprofil zu erkennen, mit welchem die Schiebehülse 41 drehfest in der Führung 40 gelagert ist.

Weiter zum Außenrand der Revolverscheibe 10 hin ist die Spannachse S im Zentrum des Spannschaftes 17 des Werkzeugkopfes 11 angedeutet.

Außerhalb des Bereiches der Revolverscheibe 10 ist eine Bestückung des Werkzeugkopfes 11 mit einem festen Werkzeug 12 in Form eines Drehmeißels dargestellt, wobei im Gegensatz zu den Fig. 1 bis 4 das Werkzeug diesmal radial vom Werkzeugrevolver wegragt. Deutlich zu erkennen ist der kegelige Aufnahmeschacht 25 des Werkzeuges, der in eine entsprechende Werkzeugaufnahme 26 an dem Werkzeugkopf 11 paßt. Da derartige, feste Werkzeuge 12 in einer bestimmten Drehlage in die Werkzeugaufnahme 26 eingesetzt werden müssen, ist an einer Stelle des Umfanges des Aufnahmeschachtes 25 ein Verriegelungselement 21 in Form einern Paßfeder dargestellt. Infolgedessen müssen auch die parallel dargestellten drehantreibbaren Werkzeuge 12, bei denen es ansonsten nicht auf eine bestimmte Drehlage innerhalb der Werkzeugaufnahme 26 ankommt, ein solches Verriegelungselement 21 aufweisen, so daß für die immer in der gleichen Drehlage herantransportierten Werkzeuge durch eine automatische Werkzeugwechseleinrichtung eine bestimmte Drehlage der Werkzeugaufnahme 26 für das Wechseln des Werkzeuges bei in der Revolverscheibe 10 verbleibendem Werkzeugkopf notwendig ist.

## Ansprüche

1. Verfahren zum Wechseln von Werkzeugen in einem Werkzeugkopf für angetriebene Werkzeuge, welcher in der Revolverscheibe (10) eines Werkzeugrevolvers einer Werkzeugmaschine aufgenommen ist,
dadurch **gekennzeichnet**, daß
- der Werkzeugkopf (11) durch verschwenken der Revolverscheibe (10) gegenüber dem Revolvergehäuse (9) um die Revolverachse (R) in eine von der Bearbeitungsposition verschiedene Wechselposition gebracht wird,
- das zu wechselnde Werkzeug (12) bzw. die zugeordnete Werkzeugaufnahme (26) des Werkzeugkopfes (11) durch Drehen des Drehantriebes des Werkzeugkopfes über die Antriebsvermittlung (14) in der Revolverscheibe (10) von dem Revolvergehäuse (9) aus in eine für den Werkzeugwechsel geeignete Drehlage bezüglich des Werkzeugkopfes (11) gebracht wird,
- das Lösen bzw. Spannen des Werkzeuges (12) in der Werkzeugaufnahme (26) des Werkzeugkopfes (11) über die von der Antriebsachse (20) des Werkzeugkopfes (11) räumlich getrennte Spannachse (S) von der Rückseite der Revolverscheibe (10) her erfolgt.

2. Werkzeugwechseler für Werkzeugmaschinen mit einem Werkzeugrevolver, auf welchem wenigstens ein drehantreibbarer Werkzeugkopf angeordnet ist, in den wiederum wenigstens ein feststehendes oder drehendes Werkzeug eingesetzt ist,
dadurch **gekennzeichnet**, daß
- der Antrieb des Werkzeugkopfes (11) sowie das Spannen des Werkzeugkopfes (11) in der Revolverscheibe (10) entlang räumlich getrennter Achsen erfolgt,
- im Revolvergehäuse (9) der Antrieb (13) für den Arbeitseinsatz der angetriebenen Werkzeuge (12) und Mittel zum Spannen des Werkzeuges (12) bzw. des Werkzeugkopfes (11) in der Revolverscheibe (10) auf unterschiedlichen Winkelpositionen, nämlich der sogenannten Bearbeitungsposition und der sogenannten Wechselposition, bezüglich der Revolverachse (R) angeordnet sind,
- in der Wechselposition ein Positionierantrieb in dem Revolvergehäuse angeordnet ist, welcher mit geringer Leistung über die Antriebsvermittlung (14) in der Revolverscheibe (10) das Werkzeug (12) und die zugeordnete Werkzeugaufnahme (26) in die für das Wechseln des Werkzeuges (12) notwendige Drehlage des Werkzeuges (12) bezüglich des Werkzeugkopfes bringt und drehfest justiert und in den Spannschaft (17) zum Spannen des Werkzeugkopfes (11) an der Revolverscheibe (10) Vorrichtungen zum Spannen bzw. Lösen des Werkzeuges (12) integriert sind, die von der offen zugänglichen Rückseite der Revolverscheibe (10) im Bereich der Öffnung (22) für den Spannschaft (17) her betätigt werden.

3. Werkzeugwechsler nach Anspruch 2,
dadurch **gekennzeichnetmet**, daß
die als Antriebsvermittlung (14) eingesetzte Welle (27) der Revolverscheibe (10) mit einer axial verschiebbaren, drehfest im Revolvergehäuse (9) angeordnetem Verschiebehülse über eine Stirnverzahnung drehfest zusamenwirken kann und die zusammenwirkenden Stirnseiten der Welle (27) und der Verschiebehülse (41) jeweils nur an einer Stelle ihres Umfanges auf dem gleichen Teilkreis einen leicht über die Stirnfläche hervorstehenden Stift (38) sowie eine entsprechend geformte Ausnehmung (39) aufweisen, so daß deren Ineinanderrasten in nur einer einzigen möglichen Drehlage Voraussetzung für das vollständige, stirnseitige Ineinanderrasten der beiden Wirkflächen ist.

4. Werkzeugwechlser nach Anspruch 2 oder 3, dadurch **gekennzeichnet,** daß die Welle (27) mittels eines schwachen Positioniermotors (35) angetrieben werden kann.

5. Werkzeugwechsler nach Anspruch 4, dadurch **gekennzeichnet,** daß der Antrieb der Welle (27) über den Positioniermotor mittels eines Bolzens (32) geschieht, der zentral in der Verschiebehülse (41) axial beweglich und drehbar gelagert ist und mit dem gegenüberliegenden Stirnbereich der Welle (27) nur in einer Drehlage mittels Schlitz und entsprechend geformter Klinge formschlüssig und drehfest verbunden werden kann.

6. Werkzeugwechsler nach Anspruch 3 bis 5, dadurch **gekennzeichnet,** daß sowohl die Verschiebehülse (41) als auch der Bolzen (32) mittels Federkraft in Richtung auf die Revolverscheibe (19) und damit die Welle (27) beaufschlagt sind.

7. Werkzeugwechsler nach einem der Ansprüche 3 bis 6, dadurch **gekennzeichnet,** daß die Verschiebehülse (41) an ihrem Außenumfang mittels eines Vielnutprofils in einer im Revolvergehäuse ortsfest angeordneten Führung (40) verschiebbar ist.

8. Werkzeugwechsler nach einem der vorhergehenden Ansprüche, dadurch **gekennzeichnet,** daß innerhalb des Revolvergehäuses ein Endschalter angeordnet ist, mittels dem jederzeit die axiale Lage der Verschiebehülse (41) und damit der Funktionszustand des Positionierantriebes (28) festgestellt werden kann.

Fig. 1

Fig. 2

Fig. 3

FIG. 4

FIG. 5

## EINSCHLÄGIGE DOKUMENTE

EP 90113883.4

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>DE - A1 - 3 715 676</u><br>(BARUFFALDI FRIZIONI S.P.A.)<br>* Gesamt *<br>-- | 1,2 | B 23 B 29/32<br>B 23 Q  3/155 |
| A | <u>DE - A1 - 2 435 947</u><br>(TOYODA KOKI K.K.)<br>* Gesamt *<br>-- | 1,2,3,4 | |
| A | <u>US - A - 4 700 442</u><br>(LAHM)<br>* Gesamt *<br>-- | 1,2 | |
| A | <u>DE - A1 - 3 103 466</u><br>(MASCHINENFABRIK DIEDESHEIM, GMBH)<br>* Fig. 1,2 *<br>-- | 1,2 | |
| A | <u>DE - B2 - 1 777 019</u><br>(KEARNEY & TRECKER CORP.)<br>* Gesamt *<br>---- | 1,2 | |

RECHERCHIERTE SACHGEBIETE (Int Cl⁵)

B 23 B 29/00
B 23 B  7/00
B 23 B  3/00
B 23 Q  3/00
B 23 Q  5/00
B 23 Q 16/00

Der vorliegende Recherchenbericht wurde für alle Patentansprüche erstellt.

| Recherchenort | Abschlußdatum der Recherche | Prüfer |
|---|---|---|
| WIEN | 12-10-1990 | BRÄUER |